Europäisches Patentamt

European Patent Office

Office européen des brevets

(19)

(11) Veröffentlichungsnummer: **0 154 141**
**B1**

(12) EUROPÄISCHE PATENTSCHRIFT

(45) Veröffentlichungstag der Patentschrift:
27.01.88

(51) Int. Cl.⁴: **B 29 C 59/04**

(21) Anmeldenummer: **85100707.0**

(22) Anmeldetag: **24.01.85**

(54) **Verfahren zur Herstellung einer Prägewalze zum kontinuierlichen Prägen der Oberfläche einer thermoplastischen Folie.**

(30) Priorität: **20.02.84 DE 8405040 U**

(43) Veröffentlichungstag der Anmeldung:
**11.09.85 Patentblatt 85/37**

(45) Bekanntmachung des Hinweises auf die Patenterteilung:
**27.01.88 Patentblatt 88/4**

(84) Benannte Vertragsstaaten:
**BE FR GB IT LU NL SE**

(56) Entgegenhaltungen:
**AT - B - 262 594**
**DE - A - 2 217 566**
**DE - B - 1 220 586**
**DE - B - 1 300 850**
**DE - C - 821 472**

(73) Patentinhaber: **J. H. Benecke AG, Beneckeallee 40,
D-3000 Hannover 1 (DE)**

(72) Erfinder: **Wagner, Werner, Dr. Dipl.-Chem.,
Harrenhorst 25, D-3052 Bad Nenndorf (DE)**

(74) Vertreter: **Leine, Sigurd, Dipl.-Ing. et al, LEINE & KÖNIG
Patentanwälte Burckhardtstrasse 1,
D-3000 Hannover 1 (DE)**

### Beschreibung

Die Erfindung betrifft ein Verfahren zur Herstellung einer Prägewalze der im Oberbegriff des Anspruchs 1 genannten Art.

Eine bekannte Vorrichtung der betreffenden Art weist eine Prägewalze auf, deren Prägeoberfläche auf künstliche Weise, z.B. durch mechanische Bearbeitung, mit einer Prägeform versehen ist. Dabei stells es keine Schwierigkeit dar, die Prägeform stossfrei herzustellen. Die damit geprägte thermoplastische Folie wirkt jedoch entsprechend künstlich.

Durch die DE-A-2 217 566 ist eine Vorrichtung und damit auch ein Verfahren der betreffenden Art zum Prägen von thermoplastischen Kunststoff-Flächengebilden bekannt, bei dem eine Prägewalze verwendet wird, deren Manteloberfläche mit Silikonkautschuk belegt ist, deren Oberfläche eine Narbung aufweist. Die Prägewalze ist in der Weise hergestellt, dass ein stählerner Walzenkörper in einer mit dem Positiv der Prägung ausgekleideten Form mit Silikonkautschuk umgossen wird. Wird als Auskleidung der Giessform natürliches Material, beispielsweise Leder verwendet, so ergeben sich Stossstellen in der Narbung, die später auch in dem geprägten Material sichtbar sind.

Aufgabe der Erfindung ist es, ein Verfahren anzugeben, nach dem sich eine Prägewalze für eine Vorrichtung zum kontinuierlichen Prägen der Oberfläche einer thermoplastischen Folie in einfacher Weise herstellen lässt, die eine natürliche Ledernarbung, Textil- oder sonstige Struktur aufweist, ohne dass Diskontinuitäten der natürlich Prägestruktur entstehen.

Die der Erfindung zugrundeliegende Aufgabe wird durch die im Kennzeichen des Anspruchs 1 angegebene Lehre gelöst.

Diese Lehre löst insbesondere das schwierige Problem, das bei der Verwendung einer natürlichen Lederoberfläche als Ausgangsform dadurch entsteht, dass diese Lederoberfläche nicht in einer kontinuierlichen Form vorliegt. Somit lässt sich grundsätzlich nur eine hier durchgehend als Prägemutter bezeichnete Prägeschicht z.B. in Form eines langgestreckten Rechtecks herstellen. Wird dies zu einem Schlauch gebogen, so entsteht an den gegeneinanderstossenden Rändern eine Diskontinuität, die so augenfällig ist, dass eine kontinuierliche Prägung einer thermoplastischen Folie allein mit einer solchen schlauchförmig gebogenen Prägemutter nicht möglich ist.

Das Wesentliche der Erfindung besteht darin, dieses Problem der Diskontinuität zu überwinden, um dadurch eine kontinuierliche Prägung einer thermoplastischen Folie in grossen Mengen zu ermöglichen. Hierzu sieht die erfindungsgemässe Lehre vor, die natürliche Narbungsvorlage, die z.B. eine rechteckige Form hat, auf eine Walze aufzubringen, wobei natürlich die sich in Umfangsrichtung gegenüberliegenden Kanten unmittelbar aneinanderstossen. Dadurch entsteht eine endlose natürliche Narbungsvorlage, die jedoch den Mangel der Diskontinuität der Narbung im Bereich der gegeneinanderstossenden Ränder hat.

Erfindungsgemäss wird durch Aufstreichen von Silikonkautschuk auf die Walze und durch nachfolgendes Vulkanisieren und Abziehen eine Prägemutter geschaffen, die zwar immer noch den Mangel der Diskontinuität im Bereich der gegeneinanderstossenden Ränder der natürlichen Narbungsvorlage hat, jedoch bereits endlos, nämlich schlauchförmig ist, so dass sie sich zum Prägen einer ebenfalls schlauchförmigen und damit endlosen thermoplastischen Folie eignet.

Nach Prägen dieser endlosen, thermoplastischen Folie weist diese in ihrer Oberflächenstruktur immer noch die ursprüngliche Diskontinuität auf, sie hat aber den Vorteil der Endlosigkeit und insbesondere den, noch einmal thermoplastisch verformt, also insbesondere geprägt werden zu können. Erfindungsgemäss wird nun die thermoplastische Positivform in dem Bereich, in dem die Diskontinuität der Narbung deutlich wird, durch die Negativform der Prägemutter überprägt, so dass dadurch die Diskontinuität der Narbung verschwindet.

Auf diese Weise ergibt sich eine Positivform, die in ihrer Ausdehnung und insbesondere in der Oberflächenstruktur endlos ist, also keine Diskontinuitäten aufweist. Diese Positivform eignet sich daher als Giess- oder Streichunterlage zum Aufbringen von Silikonkautschuk, der nach dem Vulkanisieren und Abziehen die Narbung der ursprünglichen Narbungsvorlage in Negativform und ohne Diskontinuitäten in der Narbung aufweist und, mit der Narbung nach aussen, auf die Prägewalze aufgebracht werden kann, mit der ein kontinuierliches Prägen einer natürlichen Ledernarbung ohne Diskontinuitäten möglich ist.

Das Aufbringen des Silikonkautschuks erfolgt sowohl auf die natürliche Narbungsvorlage als auch auf die thermoplastische Zwischenform immer, wenn sich diese auf Walzen befinden. Diese lassen sich dabei ständig drehen, wobei das Aufbringen mittels einer Rakel erfolgt. Auch das Vulkanisieren erfolgt bei sich drehender Walze, so dass insgesamt eine hohe Gleichmässigkeit der Silikonkautschukschicht erzielt wird.

Das Prägen der schlauchförmigen, thermoplastischen Folie erfolgt zweckmässigerweise in einem Spalt zwischen zwei Walzen, wobei es besonders vorteilhaft ist, wenn die schlauchförmige thermoplastische Folie und/oder die schlauchförmige Prägemutter jeweils eine der beiden den Spalt bildenden Walzen eng umschliessen. Wegen der Verwendung von Walzen lassen sich auch diese Vorgänge mit hoher Genauigkeit durchführen.

Grundsätzlich ist es möglich, nicht nur ein, z.B. rechteckiges Stück einer natürlichen Narbungsvorlage auf die Walze als Giessunterlage für Silikonkautschuk aufzubringen, sondern auch mehrere sowohl in Umfangsrichtung als auch in Achsrichtung der Walze. Dadurch entstehen natürlich mehrere Diskontinuitäten, die jedoch erfindungsgemäss durch Überprägung zum Verschwinden gebracht werden können.

Handelt es sich um Diskontinuitäten in Achsrichtung, so lässt sich das Überprägen im Spalt zwischen zwei Walzen ganz einfach in der Weise durchführen, dass der Prägedruck zu Beginn des Durchlaufs des zu überprägenden Bereichs kontinuierlich zunehmend erhöht und am Schluss kontinuierlich abnehmend vermindert wird. Handelt es sich um Diskontinuitäten, die sich in Umfangsrichtung erstrecken, so ist ein Überprägen im Spalt zwischen zwei Walzen in der Weise möglich, dass die den Spalt bildenden Walzen ballig geformt sind, so dass ein Prägespalt gebildet ist, dessen Weite von einem mittleren Minimum nach aussen hin kontinuierlich zunimmt. Auf diese Weise lässt sich eine linien- oder bandförmige Überprägung in Umfangsrichtung erzielen.

Statt einer natürlichen Lederoberfläche kann natürlich auch jede andere Art einer Oberflächenstruktur als Grundlage dienen, beispielsweise ein Gewebe, Vlies, eine Holzoberfläche oder dergleichen.

*Beispiel 1*

Zur Herstellung einer Prägewalze zum kontinuierlichen Prägen der Oberfläche einer thermoplastischen Folie wird zunächst eine Vorlage aus natürlichem Leder, Textil oder dergleichen so zugeschnitten, dass zwei parallele Kanten vorhanden sind. Diese Stück natürlichen Leders wird, mit der Narbung nach aussen, auf eine Walze aufgeklebt, derart, dass die beiden parallelen Kanten dicht gegeneinanderstossen. Danach wird bei rotierender Walze mittels einer Rakel Silikonkautschuk in gleichmässiger Schicht auf die Oberfläche der Walze aufgebracht, zu einer Prägemutter vulkanisiert und anschliessend abgezogen.

Die Prägemutter wird, mit der Negativnarbung nach aussen, auf eine Walze aufgezogen, die zusammen mit einer zweiten Walze einen Prägespalt bildet, auf welcher eine schlauchförmige Folie aus thermoplastischem Kunststoff aufgezogen ist. In dem Spalt zwischen den beiden Walzen wird in die Oberfläche der thermoplastischen Folie unter Hitze und Druck die Negativform der Prägemutter eingeprägt und so eine Positivform der Narbung gebildet.

Bis zu diesem Verfahrensschritt hat sich die Diskontinuität der natürlichen Ledernarbung im Bereich der gegeneinanderstossenden Kanten der natürlichen Narbungsvorlage aus Leder erhalten. Um diese zu beseitigen, wird die thermoplastische Folie im Bereich der Diskontinuität ihrer Positivnarbung durch die Prägemutter überprägt, und zwar mit Oberflächenbereichen der Prägemutter, die keine Diskontinuität aufweisen. Die Überprägung erfolgt in der Weise, dass beim Durchlauf der Diskontinuität durch den Prägespalt der Prägedruck kontinuierlich erhöht und danach wieder kontinuierlich verringert.

Auf die Positivform der Narbung der thermoplastischen Folie wird, während sich diese auf einer rotierenden Walze befindet, Silikonkautschuk mittels einer Rakel in gleichmässiger Schicht aufgestrichen, der anschliessend vulkanisiert wird, wobei die Walze weiterhin rotiert, um Ungleichmässigkeiten in der Schichtdicke zu vermeiden.

Nach der Vulkanisation wird der so erzeugte Silikonschlauch abgezogen und umgekrempelt, so dass nun die natürliche Narbungsvorlage auf der Aussenfläche ohne Diskontinuitäten vorhanden ist. Dieser Silikonschlauch wird auf eine Walze gezogen, nachdem deren Oberfläche vorher mit einem Haftvermittler und einem Silikonklebstoff beschichtet worden ist. Nach Aushärtung der Klebeschicht kann die Walze als Prägewalze in einer Vorrichtung zur kontinuierlichen Prägung einer thermoplastischen Folie verwendet werden.

*Beispiel 2*

Es wird wie bei Beispiel 1 verfahren, jedoch werden zwei rechteckförmige Stücke natürlichen Leders mit der Narbung nach aussen auf die Walze aufgebracht, wobei in Umfangsrichtung verlaufende, benachbarte Ränder eng aneinander anliegen. Auf diese Weise ergeben sich bei der Prägemutter und entsprechend auch bei der Narbung der thermoplastischen Folie Diskontinuitäten in der Narbung, die sich in Umfangsrichtung erstrecken.

Zur Beseitigung dieser Diskontinuitäten erfolgt eine Überprägung wie bei Beispiel 1 zwischen zwei Walzen, jedoch sind diese Walzen ballig geformt, wobei die sich in Umfangsrichtung erstreckenden Diskontinuitätslinien durch die engste Stelle des Spalts zwischen den ballig geformten Walzen geführt wird, so dass dort die Prägung am stärksten ist, während sie in axialer Richtung entfernt davon kontinuierlich abnimmt.

**Patentansprüche**

1. Verfahren zur Herstellung einer Prägewalze zum kontinuierlichen Prägen der Oberfläche einer thermoplastischen Folie, wobei die Prägefläche eine Negativform einer zu prägenden Narbung darstellt, bei dem auf die Oberfläche einer Narbungsvorlage Silikonkautschuk als gleichmässig dicke Schicht aufgegossen oder aufgestrichen und danach zu einer Prägemutter ausgehärtet und diese von der Narbungsvorlage abgezogen wird, dadurch gekennzeichnet,

dass die Narbungsvorlage natürliches Leder, Textil- oder sonstige Struktur ist,

dass die Narbungsvorlage mit der Narbung nach aussen auf eine Walze, deren Durchmesser im wesentlichen dem Durchmesser der herzustellenden Prägewalze entspricht, aufgebracht wird, derart, dass in Umfangsrichtung verlaufende, benachbarte Ränder der Narbungsvorlage eng einander anliegen,

dass das Aufgiessen oder Aufstreichen des Silikonkautschuks auf die Narbungsvorlage und das Aushärten zu einer Prägemutter erfolgen, während sich die Narbungsvorlage auf der Walze befindet, dass mit der schlauchförmigen Prägemutter unter Hitze und Druck die Oberfläche einer schlauchförmigen thermoplastischen Folie geprägt wird,

dass die die Prägung aufweisende Oberfläche der thermoplastischen Folie in den Bereichen, die den gegeneinanderstossenden Rändern der natürlichen Narbungsvorlage auf der Walze zugeordnet sind, unter Hitze und Druck mit der Prägemutter noch einmal überprägt und so eine endlose Positivform ohne Stösse in der Narbung erzeugt wird,

dass auf die Positivform eine weitere Schicht Silikonkautschuk aufgegossen oder aufgestrichen wird, die zu einer Prägemutter ausvulkanisiert, von der Positivform abgezogen und mit der negativen Prägeoberfläche nach aussen auf die Umfangsfläche der Prägewalze aufgeklebt wird.

2. Verfahren nach Anspruch 1, dadurch gekennzeichnet, dass das Aufbringen des Silikonkautschuks auf die auf der Walze befindliche natürliche Narbungsvorlage erfolgt, indem die Walze ständig gedreht und dabei mittels einer Rakel die Schicht von Silikonkautschuk aufgestrichen und anschliessend zu einer Prägemutter vulkanisiert wird.

3. Verfahren nach Anspruch 1, dadurch gekennzeichnet, dass das Prägen der schlauchförmigen thermoplastischen Folie durch die schlauchförmige Prägemutter in einem Spalt zwischen zwei Walzen erfolgt.

4. Verfahren nach Anspruch 3, dadurch gekennzeichnet, dass die schlauchförmige thermoplastische Folie und/oder die schlauchförmige Prägemutter jeweils eine der beiden den Spalt bildenden Walzen eng umschliessen.

5. Verfahren nach Anspruch 1, dadurch gekennzeichnet, dass mehrere Stücke natürlicher Narbungsvorlagen in Umfangsrichtung und/oder in Achsrichtung nebeneinander auf die Walze aufgebracht werden.

6. Verfahren nach Anspruch 3, dadurch gekennzeichnet, dass der Prägedruck zu Beginn des Durchlaufs des zu prägenden, sich in Achsrichtung erstreckenden Bereichs natürlich zunehmend erhöht und am Schluss kontinuierlich abnehmend vermindert wird.

7. Verfahren nach Anspruch 3 oder 4, dadurch gekennzeichnet, dass wenigstens zwei Stücke kontinuierlicher Narbungsvorlagen, Textilvorlagen oder sonstiger Strukturvorlagen in Achsrichtung nebeneinander auf die Walze aufgebracht werden, dass wenigstens eine der zwei den Spalt bildenden Walzen ballig geformt ist und dass die sich in Umfangsrichtung erstreckenden, zu überprägenden Bereiche, die den sich in Umfangsrichtung erstreckenden, gegeneinanderstossenden Rändern der natürlichen Narbungsvorlage zugeordnet sind, durch die engste Stelle des Spalts zwischen den zwei den Spalt bildenden Walzen hindurchgeführt werden.

## Claims

1. Method of producing en embossing roller for the continuous embossing of the surface of a thermoplastic foil, the embossing surface constituting a negative form of a graining which is to be embossed, in which silicone rubber is poured or brushed as a coating of uniform thickness on to the surface of a graining pattern and thereafter hardened to an embossing matrix and this is removed from the graining pattern, characterised in that

the graining pattern is natural leather, textile or other structure,

the graining pattern is applied, with the graining on the outside, to a cylinder, the diameter of which corresponds substantially to the diameter of the embossing cylinder which is to be produced, in such manner that those adjacent margins of the graining pattern which extend in the circumferential direction are disposed closely adjoining one another,

the pouring or coating of the silicone rubber on to the graining pattern and the hardening to form an embossing matrix take place while the graining pattern is disposed on the roller,

the surface of a tubular thermoplastic foil is embossed with the tubular embossing matrix under heat and pressure,

that surface of the thermoplastic foil having the embossing in the regions which are associated with the abutting margins of the natural graining pattern on the roller are once again embossed under heat and pressure with the embossing matrix and, as a result, an endless positive form, without breaks in the graining, is produced,

an additional coating of silicone rubber is poured or brushed on to the positive contour, which contour is vulcanised to provide an embossing matrix, is removed from the positive contour and is stuck, with the negative embossing surface on the outside, to the circumferential surface of the embossing roller.

2. Method according to claim 1, characterised in that the application of the silicone rubber to the natural embossing matrix which is on the roller is effected by the roller or cylinder being constantly rotated and, at this time, by means of a wiper, the coating of silicone rubber is brushed on and is thereafter vulcanised to form an embossing matrix.

3. Method according to claim 1, characterised in that the embossing of the tubular thermoplastic foil is effected by the tubular embossing matrix in a gap between two rollers.

4. Method according to claim 3, characterised in that the tubular thermoplastic foil and/or the tubular embossing matrix each tightly enclose one of the two rollers or cylinders forming the gap.

5. Method according to claim 1, characterised in that several pieces of natural embossing patterns are applied in juxtaposition to the roller or cylinder in the circumferential direction and/or in the axial direction.

6. Method according to claim 3, characterised in that the embossing pressure at the commencement of the passage of that region or zone which is to be embossed and which extends in the axial direction is naturally increasingly raised and, on completion, is continuously and progressively decreased.

7. Method according to claim 3 or 4, characterised in that at least two pieces of continuous graining originals, textile originals or other structural originals are applied in axial juxtaposition to the roller or cylinder, that at least one of the two rollers forming the gap is made cambered and that the regions to be embossed and extending in the circumferential direction, which regions are associated with those abutting margins of the natural embossing matrix extending in the circumferential direction, are conducted through the narrowest point of the gap between the two rollers forming the gap.

## Revendications

1. Procédé de fabrication d'un cylindre à grainer, destiné à pourvoir en continu la surface d'une feuille thermoplastique d'un grainage, la surface à grainer représentant une forme négative d'un grainage à imprimer, qui consiste à verser une résine synthétique sur la surface d'un original de grainage ou à l'en enduire sous la forme d'une couche d'épaisseur uniforme et ensuite à la durcir en une mère de grainage et à enlever celle-ci de l'original de grainage, caractérisé en ce que

l'original de grainage est une structure en cuir, en textile ou une autre structure d'origine naturelle, et le procédé consiste à appliquer l'original de grainage, ayant le grainage vers l'extérieur, sur un cylindre dont le diamètre correspond sensiblement au diamètre du cylindre à grainer à fabriquer, de manière à recouvrir sensiblement toute la surface du cylindre,

à utiliser comme résine synthétique du caoutchouc de silicone,

à effectuer le versement ou l'enduction du caoutchouc de silicone sur l'original de grainage et le durcissement en une mère d'impression, pendant que l'original de grainage se trouve sur le cylindre,

à grainer à l'aide de la mère d'impression en forme de tube souple, à chaud et sous pression, la surface d'une feuille thermoplastique en forme de tube souple,

à surimprimer encore une fois à l'aide de la mère de grainage, à chaud et sous pression, la surface de la feuille thermoplastique, qui présente le grainage, dans les régions qui sont associées aux bords aboutés de l'original de grainage d'origine naturelle et à produire ainsi un positif sans fin, sans discontinuité du grainage,

à verser sur le positif une autre couche de caoutchouc de silicone ou à l'en enduire, à vulcaniser cette couche en une mère d'impression, à enlever celle-ci du positif et à la coller, surface négative tournée vers l'extérieur, sur la surface du pourtour du cylindre à grainer.

2. Procédé suivant la revendication 1, caractérisé en ce qu'il consiste à effectuer le dépot du caoutchouc de silicone sur l'original de grainage d'origine naturelle se trouvant sur le cylindre, pendant que le cylindre tourne constamment et à effectuer l'enduction de la couche de caoutchouc de silicone au moyen d'une raclette, et ensuite, à la vulcaniser en une mère de grainage.

3. Procédé suivant la revendication 1, caractérisé en ce qu'il consiste à effectuer le grainage de la feuille thermoplastique en forme de tube souple par la mère de grainage en forme de tube souple dans une fente comprise entre deux cylindres.

4. Procédé suivant la revendication 3, caractérisé en ce que la feuille thermoplastique en forme de tube souple et/ou la mère de grainage en forme de tube souple entourent chacune étroitement l'un des deux cylindres qui forment la fente.

5. Procédé suivant la revendication 1, caractérisé en ce qu'il consiste à déposer plusieurs pièces d'original de grainage d'origine naturelle sur le cylindre, les unes à côté des autres, suivant la direction périphérique et/ou suivant la direction axiale.

6. Procédé suivant la revendication 3, caractérisé en ce qu'il consiste à augmenter de manière croissante et continue, la pression mise en œuvre pour le grainage, au début du passage de la partie à grainer et s'étendant suivant la direction axiale, et à la diminuer de manière décroissante et continue à la fin.

7. Procédé suivant la revendication 3 ou 4, caractérisé en ce qu'il consiste à déposer, sur le cylindre, l'une à côté de l'autre suivant la direction axiale, au moins deux pièces d'originaux de grainage continus, d'originaux en textile ou d'originaux ayant une autre structure, à donner à l'un au moins des deux cylindres formant la fente une forme convexe, et à faire passer les parties à surimprimer s'étendant suivant la direction périphérique et qui sont associées aux bords aboutés s'étendant suivant la direction périphérique de l'original de grainage d'origine naturelle par l'endroit le plus étroit de la fente formée par les deux cylindres.